Europäisches Patentamt

European Patent Office

Office européen des brevets

(19)

(11) Numéro de publication : **0 480 835 A1**

(12) # DEMANDE DE BREVET EUROPEEN

(21) Numéro de dépôt : **91402707.3**

(22) Date de dépôt : **10.10.91**

(51) Int. Cl.<sup>5</sup> : **B01D 61/56, // C02F1/469**

(30) Priorité : **12.10.90 FR 9012617**

(43) Date de publication de la demande :
**15.04.92 Bulletin 92/16**

(84) Etats contractants désignés :
**AT BE CH DE DK ES FR GB GR IT LI LU NL SE**

(71) Demandeur : **ELECTRICITE DE FRANCE
Service National
2, rue Louis Murat
F-75008 Paris (FR)**

(72) Inventeur : **Damien, Alain
7, rue Gambetta
F-95150 Taverny (FR)**

(74) Mandataire : **Schrimpf, Robert et al
Cabinet Regimbeau 26, Avenue Kléber
F-75116 Paris (FR)**

(54) **Cellule et appareil de déshydratation par électroosmose d'un produit à inversion de potentiel électrocinétique.**

(57)    Cellule (100) de déshydratation par électroosmose d'un produit (101) à inversion de potentiel électrocinétique.

Selon l'invention, ladite cellule (100) est constituée d'une cuve (110) dans la partie inférieure de laquelle est disposée une première électrode (120) de même signe que le potentiel électrocinétique initial du produit (101), ladite première électrode (120) étant munie d'une paroi poreuse (121) d'électroosmose, et une deuxième électrode (130) de signe opposé à la première, également munie d'une paroi poreuse (131) d'électroosmose, est placée en regard de ladite première électrode (120).

Application à la déshydratation de produits tels que les boues des stations d'épuration.

FIG_1

La présente invention concerne une cellule et un appareil de déshydratation par électroosmose d'un produit à inversion de potentiel électrocinétique.

L'invention trouve une application particulièrement avantageuse dans le domaine de la déshydratation de produits tels que les boues des stations d'épuration, et notamment les flocs issus d'abattoirs de volailles.

La déshydratation des produits par voie électrocinétique est connue depuis longtemps. Le brevet américain n° 670 350 par exemple traite de la déshydratation de la tourbe par électroosmose. Les phénomènes électrocinétiques mettent en jeu la propriété, pour un élément de surface solide isolant en contact avec un électrolyte faiblement conducteur, d'être l'objet d'une différence de potentiel induite entre les deux milieux solide et liquide contigus. C'est ce que l'on appelle le potentiel électrocinétique, ou potentiel Zéta. Pour certains produits comme la tourbe, le potentiel Zéta est naturel et autostabilisé par rapport au pH. Cependant, la plupart des produits nécessitent l'emploi d'un dispersant, comme un agent tensio-actif ionique, dont la conductibilité électrique reste limitée.

L'électroosmose consiste, schématiquement, à disposer le produit à déshydrater entre une anode et une cathode séparées par une paroi poreuse et à brancher le courant. Trois cas peuvent se présenter :

– La matière solide au contact de l'eau ne présente pas de charge superficielle, le potentiel Zéta est nul et il ne sort pas d'eau.

– La matière solide au contact de l'eau présente une charge électrique négative, le potentiel Zéta est négatif et l'eau sort de la boue au niveau de la cathode (chargée négativement).

– La matière solide au contact de l'eau présente une charge électrique positive, le potentiel Zéta est positif et l'eau sort de la boue au niveau de l'anode (chargée positivement).

Le potentiel Zéta est fonction du produit à traiter et des impuretés contenues dans l'eau. En particulier, il existe des matériaux comme les oxydes dont le potentiel électrocinétique dépend du pH =

– En milieu acide (beaucoup d'ions $H^+$), les ions $H^+$ s'adsorbent majoritairement en surface et le potentiel Zéta est alors positif.

– En milieu basique (beaucoup d'ions $OH^-$), les ions $OH^-$ s'adsorbent majoritairement en surface et le potentiel Zéta est alors négatif.

L'électroosmose s'effectue au moyen d'une électrolyse qui se traduit par les réactions suivantes :

– A l'anode:

$$2H_2O \rightarrow O_2 + 4H^+ + 4^-e$$

Si le milieu contient des chlorures, apportés par exemple par floculation au moyen de chlorure ferrique, nous aurons aussi :

$$2Cl^- \rightarrow Cl_2 + 2^-e$$

suivi d'une formation éventuelle d'ions hypochlorite.

– A la cathode :

$$2H_2O + 2^-e \rightarrow H_2 + 20H^-$$

Aussi, partant d'une boue à potentiel Zéta négatif par exemple, l'eau commencera par sortir à la cathode. Mais, au fur et à mesure de l'électrolyse, les ions $H^+$ libérés à l'anode inhibent le caractère négatif de la charge superficielle jusqu'à la rendre positive. A ce moment précis, l'eau sortira simultanément à la cathode où le produit à traiter conserve son potentiel Zéta négatif et à l'anode où, par effet d'inversion, la matière à déshydrater prendra localement un potentiel Zéta positif. Il est bien entendu que, dans le cas d'un potentiel électrocinétique positif, le même phénomène peut être décrit de la même manière en changeant le signe des électrodes.

Le problème technique à résoudre par l'objet de la présente invention est de réaliser une cellule et un appareil de déshydratation conforme au préambule qui permettrait de tirer parti de l'inversion du potentiel Zéta de certains produits afin d'augmenter l'efficacité de l'électroosmose, en quantité d'eau récupérée et en énergie consommée

La solution au problème technique posé consiste, selon la présente invention, en ce que ladite cellule est constituée d'une cuve dans la partie inférieure de laquelle est disposée une première électrode de même signe que le potentiel électrocinétique initial du produit, ladite première électrode étant munie d'une paroi poreuse d'électroosmose, et en ce qu'une deuxième électrode de signe opposé à la première, également munie d'une paroi poreuse d'électroosmose, est placée en regard de ladite première électrode.

Ainsi, il est possible de séparer l'eau produite par électroosmose aussi bien à la première qu'à la deuxième électrode de la cellule selon l'invention, alors que dans les dispositifs connus d'électroosmose, l'eau n'est évacuée qu'à la première électrode.

D'autre part, de façon à simplifier la réalisation de la cellule de déshydratation de l'invention, il est prévu que, des premiers moyens d'évacuation de l'eau formée à la première électrode étant disposés au fond de ladite cuve, des deuxièmes moyens d'évacuation de l'eau formée à la deuxième électrode vers lesdits premiers

2

EP 0 480 835 A1

moyens d'évacuation sont aménagés sur au moins une paroi latérale de la cuve.

Enfin, la Demanderesse a constaté qu'il y avait avantage à ce que ladite cellule comporte des moyens pour exercer une force de pression sur ladite deuxième électrode.

D'autres caractéristiques et avantages relatifs à la cellule et à un appareil de déshydratation conformes à l'invention seront maintenant donnés à la lecture de la description suivante, en regard des dessins annexés fournis à titre d'exemples non limitatifs.

La figure 1 est une vue en coupe d'une cellule de déshydratation selon l'invention.

La figure 2a montre une vue de dessus d'un élément filtrant conforme à l'invention.

La figure 2b est une vue partielle en coupe de l'élément filtrant de la figure 2a.

La figure 2c est une vue en perspective de l'élément filtrant de la figure 2a en position repliée.

La figure 3 est le schéma d'un appareil de déshydratation, objet de l'invention.

La figure 4a est une vue de côté d'un premier ensemble d'électrodes utilisé dans l'appareil de la figure 3.

La figure 4b est une vue de côté d'un deuxième ensemble d'électrodes utilisé dans l'appareil de la figure 3.

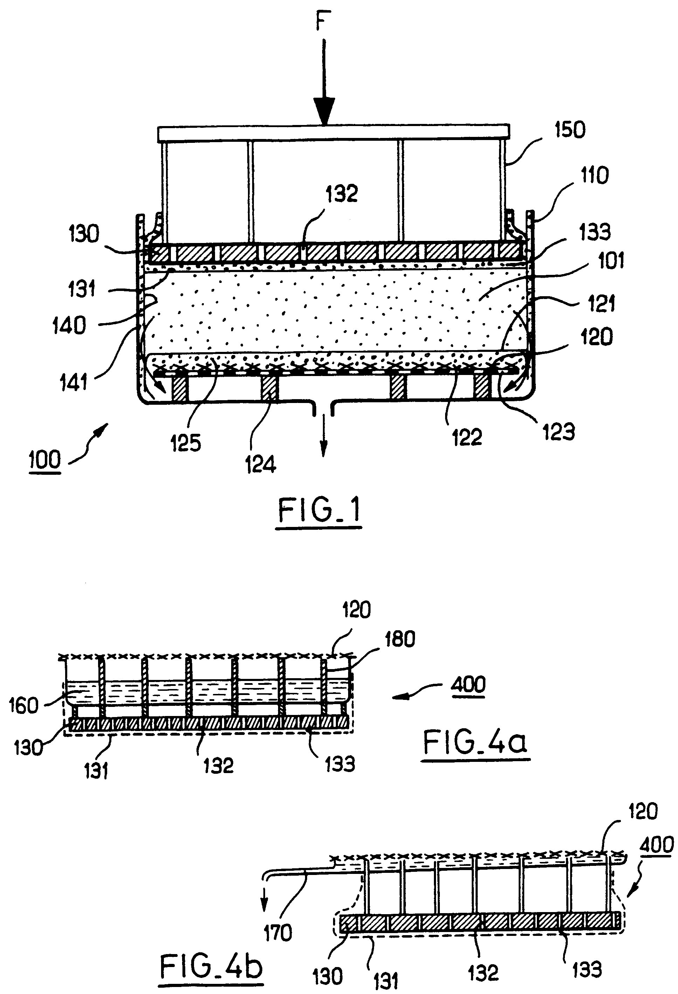

La figure 1 montre une cellule 100 de déshydratation d'un produit 101 à inversion de potentiel électrocinétique. Ce produit peut être, par exemple, une boue de station d'épuration dont le potentiel électrocinétique ou potentiel Zéta initial sera pris, à titre d'illustration, de signe négatif. Comme l'indique la figure 1, ladite cellule 100 est constituée d'une cuve 110 dans la partie inférieure de laquelle est disposée une première électrode 120, ici une cathode, de même signe que le potentiel électrocinétique initial du produit 101 à déshydrater. La cathode 120 est munie d'une paroi poreuse 121 d'électroosmose, par exemple un tissu filtrant destiné à laisser passer l'eau qui migre vers la cathode au cours de l'opération d'électroosmose, tout en retenant les particules solides constituant le produit 101 à traiter. De façon à permettre l'évacuation de l'eau formée à la cathode 120, celle-ci présente des premiers moyens d'évacuation comprenant, ainsi que le montre le mode de réalisation de la figure 1, d'une part, des perforations 122 aménagées dans la cathode constituée d'une tôle d'acier inoxydable déployée et, d'autre part, d'une plaque perforée isolante 123 maintenue au fond de la cuve 110 par des cales 124.

Une deuxième électrode 130, une anode dans l'exemple considéré, de signe opposé à la première électrode 120, placée en regard de la cathode 120, est également munie d'un tissu filtrant 131 de manière à séparer l'eau qui, du fait de l'inversion de potentiel Zéta expliquée plus haut, migre vers l'anode 130.

La mise en oeuvre des doubles phénomènes d'électroosmose se produisant aux deux électrodes conduit à une amélioration sensible des performances par rapport à celle d'une cellule classique n'utilisant qu'un seul compartiment de séparation eau-particules solides. La Demanderesse a effectué des essais sur un floc issu d'une station d'épuration d'abattoirs de volailles qui ont montré que l'eau récupérée à l'anode pouvait atteindre 30 % de l'eau récupérée à la seule cathode, ce qui permet de diminuer considérablement le taux d'humidité finale pour une même consommation énergétique. La Demanderesse a également constaté que l'utilisation de moyens 150 pour exercer une force de pression F sur l'anode 130 avait un effet bénéfique sur le rendement global.

Comme on peut le voir à la figure 1, des deuxièmes moyens d'évacuation 140, 141 de l'eau formée à l'anode 130 vers lesdits premiers moyens d'évacuation 122, 123, sont aménagés sur au moins une paroi latérale 111 de la cuve 110. Ces deuxièmes moyens d'évacuation comprennent, par exemple, un feutre isolant 140 recouvert d'un tissu filtrant 141. Ainsi, l'eau formée à l'anode 130 s'écoule par capillarité et gravitation à travers le feutre isolant 140 pour rejoindre les premiers moyens d'évacuation prévus à la cathode 120. La Demanderesse a observé que cette disposition permettait d'accélérer considérablement l'efficacité de l'électroosmose. Le floc de boue biologique mentionné plus haut a pu être déshydraté en 2 heures, avant que les effets de la fermentation ne commencent à se faire sentir (3 heures). Un essai identique, en l'absence de parois latérales poreuses, toutes conditions égales par ailleurs, nécessite une dizaine d'heures d'électroosmose afin d'obtenir une humidité finale moyenne identique.

On peut également remarquer sur la figure 1 que l'anode 130, ici en graphite, comporte des perforations 132 destinées à évacuer les gaz qui se forment par électrolyse. De façon à faciliter cette évacuation de gaz aux électrodes, celles-ci sont pourvues de feutre isolant 125 et 133. Dans le cas de l'anode, l'ensemble du graphite perforé et du feutre isolant pourrait être remplacé par un feutre conducteur unique de carbone.

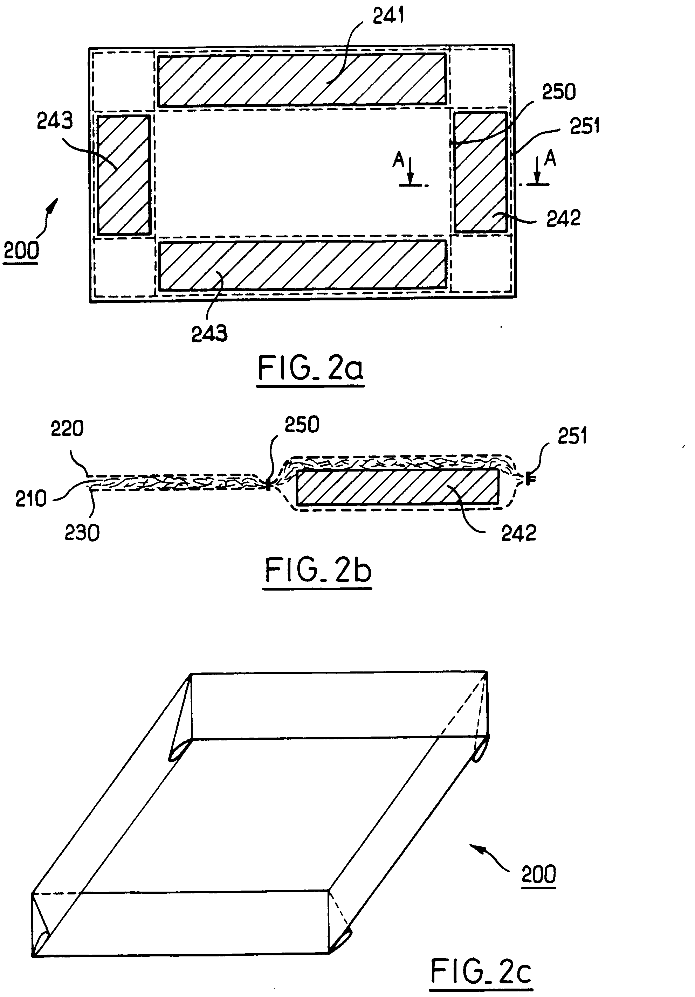

Les figures 2a à 2c montrent un élément filtrant 200 ayant pour office de constituer, dans une seule pièce, à la fois, d'une part, les deuxièmes moyens d'évacuation 140, 141 et, d'autre part, le feutre isolant 125 et le tissu filtrant 121 d'électroosmose de la cathode 120.

Comme le montre la figure 2a, l'élément filtrant 200 se présente à l'état déplié comme une pièce de textile rectangulaire formée, ainsi que représentée sur la figure 2b, d'un sandwich de feutre isolant 210 placé entre deux tissus filtrants 220, 230. Sur les bords de l'élément filtrant 200, quatre plaques rigides 241, 242, 243, 244 isolantes, en polychrorure de vinyle (PVC) par exemple, sont disposées latéralement entre un premier tissu filtrant 220 et le feutre isolant 210, d'une part, et un deuxième tissu filtrant 230, d'autre part. Les quatre plaques rigides de PVC sont ensuite fixées par des coutures latérales 250, 251 montrées sur la figure 2b. Ainsi, l'élément filtrant 200 présente quatre bords rabattables qui, une fois rabattus, donnent audit élément filtrant une forme de parallélépipède rectangle qui peut être introduit dans une cuve ayant sensiblement les mêmes dimensions ou guidé latéralement par des rails verticaux, la boue assurant un plaquage des parois latérales contre ces rails verticaux. Le fond de l'élément filtrant assure les fonctions du feutre isolant et du tissu filtrant de la cathode, tandis que les parois verticales constituent les deuxièmes moyens d'évacuation. Cette forme donnée à l'élément filtrant présente l'avantage d'éviter tout problème d'étanchéité qui pourrait se poser entre les parois verticales poreuses et le compartiment cathode, surtout lorsqu'une force de pression est exercée sur le produit 101 à déshydrater.

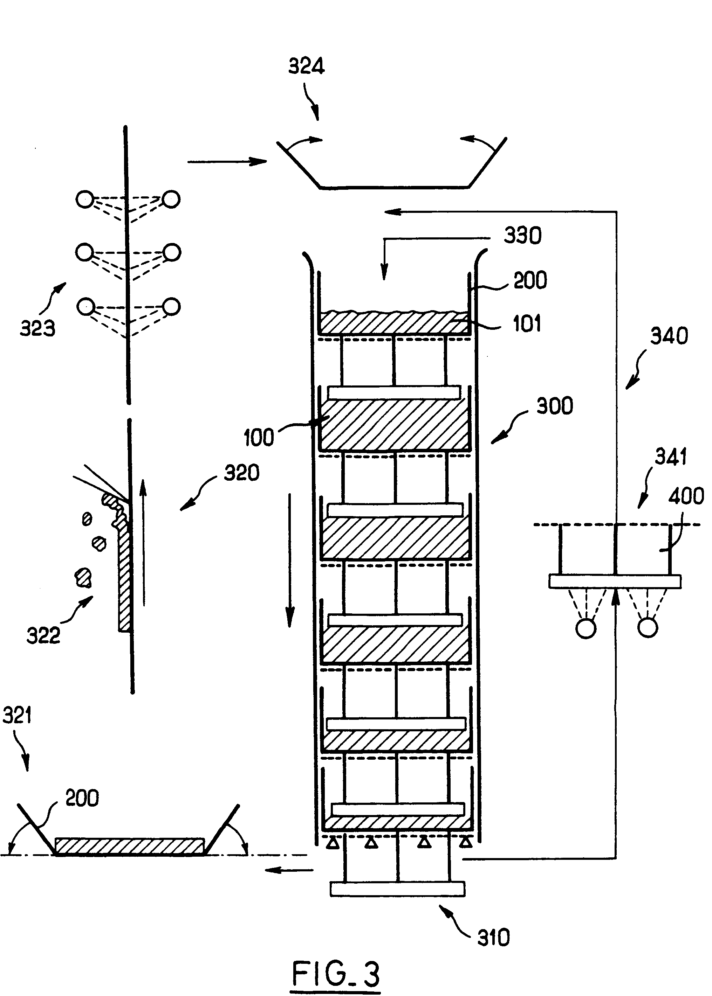

La figure 3 montre un schéma d'un appareil de déshydratation par électroosmose d'un produit à inversion de potentiel électrocinétique comportant une colonne 300 constituée par empilement de cellules 100 telles que décrites en regard des figures 1 et 2a à 2c. Ainsi qu'on peut le remarquer sur la figure 1, les cathode et anode adjacentes de deux cellules consécutives forment un ensemble 400 d'électrodes dont deux modes de réalisation sont donnés aux figures 4a et 4b.

L'ensemble d'électrodes de la figure 4a comporte une cathode 120 supérieure, telle que décrite précédemment. A la partie inférieure se trouve une anode 130 à perforations 132, équipée du feutre isolant 133 et du tissu filtrant 131. Les deux électrodes sont reliées par une liaison mécanique isolante rigide 180 de façon à ce que, dans la colonne 300 de la figure 3, le produit contenu dans une cellule soit soumis au poids de toutes les cellules précédentes. Un dispositif 160 de captage d'eau sous la cathode 120 permet de conserver l'eau en vue d'accroître la pression sur les cellules inférieures.

D'autre part, l'ensemble d'électrodes dispose de contacts électriques latéraux, non représentés, nécessaires à la mise sous tension des électrodes.

Dans le mode de réalisation de la figure 4b, le dispositif 170 de captage d'eau permet au contraire l'évacuation de l'eau à la cathode 120 si une pression trop importante n'est pas nécessaire.

Comme l'indique le schéma de la figure 3, les cellules de la colonne 300 sont animées d'un mouvement descendant, les contacts électriques latéraux des ensembles 400 d'électrodes coulissent par exemple sur des rails conducteurs verticaux latéraux reliés à une source de tension. Toutes les cellules de la colonne sont donc soumises à une tension constante. L'eau sort en permanence, évacuée ou non, et l'épaisseur de boue diminue progressivement avec sa transformation en pâte, puis en gâteau.

A la partie inférieure de la colonne 300, un dispositif 310 de récupération sépare, au fur et à mesure de leur arrivée, ledit élément filtrant 200 et ledit ensemble 400 d'électrodes d'une même cellule.

L'élément filtrant 200 est dirigé vers un premier dispositif 320 de convoyage ascendant comprenant un poste 321 de dépliage dudit élément filtrant, un poste 322 de raclage du produit déshydraté sous forme de gâteau, cette opération étant facilitée du fait que le produit est en contact avec le tissu filtrant lisse. L'élément filtrant est ensuite nettoyé à un poste 323 de lavage, puis replié et introduit dans la partie supérieure de la colonne 300 au niveau d'un poste 324 de repliage et d'introduction. La forme définitive prise par l'élément filtrant 200 est celle d'une cuve délimitée par cathode inférieure et par des rails latéraux de guidage de l'empilement. Enfin, un poste 330 d'approvisionnement remplit l'élément filtrant de produit 101 à traiter.

L'ensemble 400 d'électrodes est dirigé du bas de la colonne 300 vers un deuxième dispositif 340 de convoyage ascendant comprenant un poste 341 de lavage dudit ensemble d'électrodes, lequel est mis en place dans l'élément filtrant 200 à la partie supérieure de la colonne 300.

Si nécessaire, et notamment lorsque le produit à déshydrater est trop fluide, ledit appareil de déshydratation peut comporter, à la partie supérieure de la colonne 300, une cellule supplémentaire indépendante qui n'est introduite dans la colonne qu'après qu'une consistance donnée du produit ait été atteinte, de manière que le produit puisse supporter la force de pression exercée lors de la descente dans la colonne.

## Revendications

1.  Cellule (100) de déshydratation par électroosmose d'un produit (101) à inversion de potentiel électrocinétique, caractérisée en ce que ladite cellule (100) est constituée d'une cuve (110) dans la partie inférieure de laquelle est disposée une première électrode (120) de même signe que le potentiel électrocinétique initial du produit (101), ladite première électrode (120) étant munie d'une paroi poreuse (121) d'électroosmose, et en ce qu'une deuxième électrode (130) de signe opposé à la première, également munie d'une paroi poreuse (131) d'électroosmose, est placée en regard de ladite première électrode (120).

2.  Cellule de déshydratation selon la revendication 1, caractérisée en ce que des premiers moyens d'évacuation (122, 123) de l'eau formée à la première électrode (120) étant disposés au fond de ladite cuve (110), des deuxièmes moyens d'évacuation (140, 141) de l'eau formée à la deuxième électrode (130) vers lesdits premiers moyens d'évacuation, sont aménagés sur au moins une paroi latérale (111) de la cuve (110).

3. Cellule de déshydratation selon l'une des revendications 1 ou 2, caractérisée en ce que ladite cellule (100) comporte des moyens (150) pour exercer une force de pression (F) sur ladite deuxième électrode (130).

4. Cellule de déshydratation selon l'une quelconque des revendications 1 à 3, caractérisée en ce que lesdits deuxièmes moyens d'évacuation comportent un feutre isolant (140) recouvert d'au moins un tissu filtrant (141).

5. Cellule de déshydratation selon la revendication 4, caractérisée en ce que la première électrode comporte au moins un tissu filtrant faisant office de paroi poreuse d'électroosmose et un feutre isolant, qui, avec lesdits deuxièmes moyens d'évacuation, constitue un même élément filtrant (200).

6. Cellule de déshydratation selon la revendication 5, caractérisée en ce que ledit élément filtrant (200) constitue une pièce textile sensiblement rectangulaire munie d'un cadre rectangulaire rabattable (241, 242, 243, 244).

7. Cellule de déshydratation selon l'une quelconque des revendications 1 à 6, caractérisée en ce que lesdits premiers moyens d'évacuation (122, 123) comprennent des perforations (122) pratiquées dans la première électrode (120).

8. Cellule de déshydratation selon l'une quelconque des revendications 1 à 7, caractérisée en ce que ladite deuxième électrode (130) comporte des perforations (132).

9. Cellule de déshydratation selon la revendication 8, caractérisée en ce que ladite deuxième électrode (130) est munie d'un feutre isolant (133).

10. Cellule de déshydratation selon l'une quelconque des revendications 1 à 7, caractérisée en ce que ladite deuxième électrode (130) est constituée par un feutre conducteur.

11. Appareil de déshydratation par électroosmose d'un produit à inversion de potentiel électrocinétique, caractérisé en ce que ledit appareil comporte :
   – une colonne (300) constituée par un empilement d'une pluralité de cellules (100) selon l'une quelconque des revendications 5 à 10, les première (120) et deuxième (130) électrodes adjacentes de deux cellules consécutives, formant un ensemble (400) d'électrodes, étant reliées par une liaison mécanique isolante rigide (180) de façon à ce que le produit contenu dans une cellule soit soumis au poids de toutes les cellules précédentes, tandis que les cellules de ladite colonne (300), animées d'un mouvement descendant, sont reliées par coulissement à une même source de tension afin de soumettre ledit produit à l'opération d'électroosmose pendant toute la durée de la descente,
   – un dispositif (310) de récupération, situé à la partie inférieure de la colonne (300), séparant, au fur et à mesure de leur arrivée, ledit élément filtrant (200) et ledit ensemble (400) d'électrodes d'une même cellule (100), ledit dispositif de récupération dirigeant ensuite :
      . l'élément filtrant (200) vers un premier dispositif (320) de convoyage ascendant comprenant un poste (321) de dépliage dudit élément filtrant, un poste (322) de raclage du produit, un poste (323) de lavage de l'élément filtrant, et un poste (324) de repliage et d'introduction dudit élément filtrant (200) dans la partie supérieure de ladite colonne (300) où un poste (330) d'approvisionnement remplit l'élément filtrant de produit (101) à traiter,
      . l'ensemble (400) d'électrodes vers un deuxième dispositif (340) de convoyage ascendant comprenant un poste (341) de lavage dudit ensemble d'électrodes, lequel ensemble d'électrodes est mis en place dans l'élément filtrant (200) à la partie supérieure de la colonne (300).

12. Appareil de déshydratation selon la revendication 11, caractérisé en ce que ledit appareil comporte, à la partie supérieure de ladite colonne (300), une cellule supplémentaire indépendante, introduite dans la colonne après qu'une consistance donnée du produit soit atteinte.

FIG.1

FIG.4a

FIG.4b

FIG. 2a

FIG. 2b

FIG. 2c

FIG. 3

Office européen
des brevets

**RAPPORT DE RECHERCHE EUROPEENNE**

Numero de la demande

EP    91 40 2707

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 046 155 (INNOVA INC)<br>* abrégé; revendications 1,3,4,12; figure 4 *<br>* page 8, ligne 13 - page 10, ligne 17 * | 1,7-9 | B01D61/56<br>//C02F1/469 |
| Y | | 2,3 | |
| Y | DE-C-154 114 (MÖLLER & PFEIFER)<br>* le document en entier * | 3 | |
| A | | 1,7,11 | |
| Y | GB-A-383 199 (FJELL)<br>* le document en entier * | 2 | |
| A | | 1,3,7,8 | |
| A | PATENT ABSTRACTS OF JAPAN<br>vol. 9, no. 260 (C-309)(1983) 17 Octobre 1985<br>& JP-A-60 114 315 ( SINKO FAUDORA ) 20 Juin 1985<br>* abrégé * | 1,3,7,8 | |
| A | US-A-3 664 940 (GREYSON)<br>* abrégé; figure 1 *<br>* colonne 2, ligne 41 - colonne 3, ligne 15 * | 1 | |

DOMAINES TECHNIQUES RECHERCHES (Int. Cl.5)

B01D
C02F

Le présent rapport a été établi pour toutes les revendications

| Lieu de la recherche | Date d'achèvement de la recherche | Examinateur |
|---|---|---|
| LA HAYE | 21 NOVEMBRE 1991 | HOORNAERT P.G.R.J. |